# FASCICULE DE BREVET EUROPEEN

(11) **EP 0 714 944 B1**
(45) Date de publication et mention de la délivrance du brevet: **07.04.1999**
(21) Numéro de dépôt: 95203243.1
(22) Date de dépôt: 24.11.1995
(51) Int. Cl.: C08L 27/16

(54) **Compositions thermoplastiques à base de polyfluorure de vinylidène**
Thermoplastische Zusammensetzungen auf Polyvinylidenfluorid-Basis
Thermoplastic compositions based on polyvinylidene fluoride

(30) Priorité: 28.11.1994 FR 9414218
(43) Date de publication de la demande: 05.06.1996
(73) Titulaire: ELF ATOCHEM S.A., 92800 Puteaux, Hauts-de-Seine (FR)
(72) Inventeur: Cerf, Martine, F-27300 Bernay (FR); Dousson, Christian, F-27300 Bernay (FR); Bouilloux, Alain, F-27300 Bernay (FR)

(56) Documents cités:
- EP-A- 0 301 949
- EP-A- 0 317 346
- EP-A- 0 365 967
- EP-A- 0 557 840
- DE-A- 3 841 699
- GB-A- 2 242 906

## Description

La présente invention concerne des compositions thermoplastiques à base de polyfluorure de vinylidène et plus particulièrement des compositions comprenant une matrice de polyfluorure de vinylidène (PVDF) dans laquelle sont dispersés des nodules de caoutchouc vulcanisé essentiellement non fluoré. On peut préparer les compositions de l'invention en mélangeant (i) le caoutchouc vulcanisable ayant été auparavant formulé avec une quantité suffisante d'agent de vulcanisation et éventuellement des charges et des plastifiants avec (ii) le PVDF à une température suffisante pour disperser le caoutchouc intimement dans le PVDF.

Les compositions de l'invention sont thermoplastiques, c'est-à-dire qu'elles sont transformables par les technologies utilisées dans les thermoplastiques telles que l'extrusion ou le calandrage. Elles ont aussi, selon la quantité de caoutchouc, un caractère élastomérique.

La matrice PVDF leur donne les propriétés du PVDF telles que par exemple les propriétés thermiques, électriques et la résistance chimique.

US 5 095 072 décrit des alliages thermoplastiques de PVDF et (ii) de caoutchouc de type nitrile ou acrylate sous forme de gel.

Cette gélification du caoutchouc est obtenue par addition de monomères multi-fonctionnels ou par polymérisation à haute température et non par vulcanisation. Le caoutchouc gélifié est ensuite mélangé avec le PVDF. Il est recommandé d'utiliser un caoutchouc nitrile ayant au moins 20 à 50 % en poids d'acrylonitrile pour améliorer la compatibilité avec le PVDF. La description cite que le caoutchouc gélifié est dispersé sous forme de particules de 0,01 à 2 µm dans le PVDF. Aucun exemple ne montre cette dispersion. Les exemples citent que le taux de déformation permanent après compression et la résistance à l'huile ce qui correspond bien au but de l'invention, à savoir de faire des objets moulés tels que des joints.

La demanderesse a reproduit quelques exemples et a constaté que le caoutchouc gélifié était distribué de façon grossière et irrégulière dans le PVDF.

Les alliages obtenus ne peuvent que présenter des propriétés en compression mais n'ont aucune propriété en traction, flexion ou en résistance au choc. Il en est ainsi des mélanges hétérogènes de polymères.

FR 2 283 927 décrit des élastomères thermoplastiques à base de PVDF et de caoutchouc fluoré pouvant être obtenus par vulcanisation dynamique. Il est souhaitable de recuire après moulage pour achever la vulcanisation.

EP 280 591 décrit des PVDF souples constitués de nodules de copolymère chlorotrifluoroéthylène / fluorure de vinylidène (VF₂) dispersés dans une matrice de PVDF.

EP 0 301 949 décrit une composition de polyfluorure de vinylidène en proportion majeure et un élastomère consistent en un copolymère butadiène-acrylonitrile non vulcanisé.

L'art antérieur a donc décrit des compositions souples à base de PVDF et contenant :
- soit des caoutchoucs nitriles gélifiés tels que décrits dans US 5 095 072 mais on n'obtient pas de propriétés mécaniques,
- soit des caoutchoucs fluorés vulcanisés ou des copolymères fluorés qui sont des produits difficiles à fabriquer et à transformer tels que décrits dans EP 365 967, EP 317 346 et EP 557 840.

La présente invention concerne une composition thermoplastique ayant une morphologie de type "nodulaire", caractérisée en ce qu'elle comprend une matrice PVDF dans laquelle sont dispersés des nodules au plus de 3 µm de caoutchouc vulcanisé essentiellement non fluoré et obtenue par vulcanisation dynamique, à l'aide d'un système de vulcanisation, du PVDF et du caoutchouc vulcanisable thermoplastiques.

Dans la présente invention, on désigne par PVDF les homo polymères du fluorure de vinylidène ou les copolymères possédant au moins 50 % en moles de restes de VF₂.

Le caoutchouc est vulcanisé lors du mélange, par système de vulcanisation sélectionné par exemple parmi les peroxydes, le soufre et ses accélérateurs, les molécules donneurs de soufre.

Les caoutchoucs synthétiques ou naturels vulcanisables convenant pour la réalisation des compositions de la présente invention sont bien connus de l'homme du métier. Ils peuvent être constitués de mélanges de plusieurs caoutchoucs.

Ces caoutchoucs ou mélanges de caoutchouc présentent une déformation rémanente à la compression (DRC) à 100° C inférieure à 50 % généralement entre 5 et 50 % et de préférence inférieure à 30 %, après vulcanisation.

Le caoutchouc peut être fonctionnalisé par exemple par des radicaux acide carboxylique, anhydrides, sels ou esters desdits acides carboxyliques, par des groupes époxy, amino ou par des halogènes.

On ne sortirait pas du cadre de l'invention en utilisant un mélange de caoutchouc contenant une faible proportion de caoutchoucs fluorés, par exemple jusqu'à 5 % en poids de la quantité de caoutchouc.

L'invention concerne aussi un procédé de préparation de ces compositions.

On peut préparer les compositions de l'invention en mélangeant (i) le caoutchouc vulcanisable ayant été auparavant formulé avec une quantité suffisante d'agent de vulcanisation et éventuellement des charges et des plastifiants avec (ii) le PVDF, à une température suffisante pour provoquer la fusion du PVDF et pendant une durée suffisante pour disperser intimement le caoutchouc dans le PVDF.

Le PVDF et le caoutchouc vulcanisable sont thermoplastiques, on pourra les appeler thermoplastiques dans la suite du texte.

De préférence, on procède à la vulcanisation dynamique à une température supérieure à la température de fusion des thermoplastiques et inférieure à 300° C ou mieux 250° C pour éviter une dégradation des caoutchoucs et autres additifs de la formulation. La durée de la vulcanisation dynamique sera de préférence suffisante pour atteindre au moins le t₉₀ de la formulation (durée pour atteindre 90 % de vulcanisation du caoutchouc).

Le matériel utilisé pour effectuer cette opération peut être un malaxeur ou comalaxeur, un mélangeur interne ou bien une extrudeuse bivis.

On peut aussi introduire le PVDF, le caoutchouc et les additifs pré mélangés ensemble à l'état plastique sur un cylindre ou dans un malaxeur, le système de vulcanisation étant introduit en même temps (ou en différé quand les thermoplastiques sont à l'état fondu), puis augmenter la température à une température supérieure à la fusion des thermoplastiques pour procéder à la vulcanisation dynamique.

A titre d'exemple de caoutchouc, on peut citer le caoutchouc naturel, le polyisoprène, une émulsion polymérisée à base de copolymère styrène/butadiène, une solution polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère séquencé styrène/butadiène, un copolymère séquencé styrène/isoprène, les produits halogénés des polymères ci-dessus, un copolymère acrylonitrile/butadiène, un copolymère acrylonitrile/butadiène hydrogéné, un élastomère acrylique, le chloroprène, les caoutchoucs épichlorhydrine. Des caoutchoucs épichlorhydrine sont décrits dans KIRK-OTHMER, Encyclopedia of Chemical Technology 3e édition Vol. 8 pages 568-572.

Les caoutchoucs ci-dessus qui ne sont pas fonctionnalisés peuvent l'être par exemple par greffage de radicaux de façon connue ou par mélange avec des élastomères déjà fonctionnalisés tels que des élastomères acryliques ou des NBR carboxylés (XNBR).

Parmi les caoutchoucs mentionnés ci-dessus, on choisira avantageusement ceux compris dans le groupe suivant : les élastomères nitriles carboxylés, les élastomères acryliques, les polybutadiènes carboxylés, les terpolymères éthylène/propylène/diène greffés ou les mélanges de ces polymères avec les mêmes élastomères mais non greffés comme les caoutchoucs nitriles, les polybutadiènes, les terpolymères éthylène/propylène/diène, seuls ou en mélange, les caoutchoucs épichlorhydrine.

On peut ajouter aussi du caoutchouc déjà vulcanisé (recyclage du matériau broyé).

Les systèmes de vulcanisation utilisés sont bien connus de l'homme du métier et en conséquence, l'invention n'est pas limitée à un type particulier de systèmes.

Lorsque le caoutchouc est à base de monomère insaturé (butadiène, isoprène, vinylidène-norbornène...) on peut citer quatre types de systèmes de vulcanisation :
- Systèmes au soufre constitués de soufre associé aux accélérateurs usuels tels que les sels métalliques de dithiocarbamates (diméthyl dithiocarbamate de zinc, de tellure, etc...), les disulfures de thiurame (tétraméthyl disulfure de thiurame, etc...), les sulfénamides, etc...

Ces systèmes peuvent contenir également de l'oxyde de zinc associé à de l'acide stéarique.
- Systèmes donneurs de soufre dans lesquels la majorité du soufre utilisée pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. Ils permettent d'avoir un produit plus stable à la chaleur, blanc, pas jaune, comme dans le cas des systèmes donneurs de soufre. Tous les donneurs de radicaux libres peuvent être utilisés (peroxydes de dicumyle, etc...) en association avec l'oxyde de zinc et l'acide stéarique.

Lorsque le caoutchouc est acrylique (polyacrylate de butyle avec fonctions acides ou époxy ou toute autre fonction réactive permettant la réticulation) on utilise les réticulants habituels à base de diamines (orthotoluidyl guanidine, diphénylguanidine, etc...) ou de diamines bloquées (carbamate d'hexaméthylène diamine etc...).

Les compositions élastomériques peuvent être modifiées pour certaines propriétés particulières (amélioration des propriétés mécaniques par exemple) par l'addition de charges telles que le noir de carbone, la silice, le kaolin, l'argile, le talc, la craie, etc... Ces charges peuvent être traitées en surface par des silanes, des polyéthylène glycols ou toute autre molécule de couplage. En général, le taux de charges en parties en poids est compris entre 5 et 100 pour 100 parties de caoutchouc.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

Les combinaisons d'agent de vulcanisation sont telles qu'elles doivent permettre une réticulation du caoutchouc et sa dispersion dans la matrice PVDF même si les quantités sont importantes.

La durée du mélange pour préparer les compositions de l'invention peut être comprise entre 2 et 20 minutes et avantageusement entre 5 et 10 minutes. On utilise une quantité d'agent de vulcanisation telle qu'à la fin du mélange du PVDF et de la formulation de caoutchouc vulcanisable, on ait obtenu au moins 90 % de la vulcanisation du caoutchouc.

Quand le caoutchouc vulcanisable est fonctionnalisé, il faut éviter de vulcaniser trop vite pour que ces fonctions puissent être utiles à une meilleure compatibilisation du caoutchouc et du PVDF. Certaines fonctions peuvent aussi agir en vulcanisation et aussi être utiles à une meilleure compatibilisation avec le PVDF.

Par exemple, dans le cas d'un caoutchouc insaturé carboxylé, la vulcanisation de la phase caoutchouc dispersée dans la matrice PVDF ayant lieu grâce aux doubles liaisons et aux groupes carboxyliques, il faut éviter que ces derniers, plus réactifs, soient tous consommés pour la réticulation, alors qu'ils peuvent être utiles à la compatibilisation avec le PVDF. C'est pour cela qu'il faut bien contrôler la température de vulcanisation pour avoir un temps de grillage suffisamment long, et laisser ainsi le temps aux groupes carboxyliques encore libres, d'inter réagir avec le PVDF en phase fondue.

Les compositions de l'invention se présentent sous forme d'une matrice en PVDF contenant des nodules au plus de 3 µm.

Les compositions de l'invention sont thermoplastiques. Au cours de la transformation ultérieure, elles restent stables, il n'y a pas de migration ni de coalescence de nodules.

La quantité de PVDF peut être de 20 à 95 parties en poids et de préférence 40 à 90 pour 5 à 80 parties de caoutchouc vulcanisé et ses charges éventuelles et de préférence 10 à 60 parties en poids.

Les compositions de l'invention présentent une résistance à la traction (traction parallèle à l'injection) à la rupture supérieure ou égale à 15 MPa. Elles présentent aussi un allongement à la rupture supérieur ou égal à 50 %.

Dans le cas d'une traction perpendiculaire à l'injection, la traction à la rupture est supérieure ou égale à 15 MPa ; elles présentent aussi un allongement à la rupture supérieur ou égal à 50 %. Les mesures sont effectuées selon ISO R 527 type H2.

Les compositions de l'invention présentent une très bonne résistance au choc multiaxial, le déplacement à force maximum est supérieur à 10 mm avantageusement supérieur à 14 et de préférence compris entre 14 et 17 mm. Cette mesure de choc est faite selon DART TEST ISO 6603-2.

Selon une deuxième forme de l'invention, on ajoute un agent de compatibilisation, ce qui permet d'augmenter la résistance au choc multiaxial. Le procédé de préparation est le même que précédemment, on peut ajouter l'agent de compatibilisation dans la formulation de caoutchouc vulcanisable. Cet agent peut être choisi parmi les polyesters aliphatiques, les polyesters aliphatiques greffés, le polyméthacrylate de méthyle imidisé, les polyoléfines gréffées par du méthacrylate de méthyle (MMA) ou du polyméthacrylate de méthyle (PMMA).

La quantité d'agent compatibilisant peut représenter jusqu'à 20 parties en poids pour 100 parties de l'ensemble PVDF -nodules de caoutchouc-.

Le polyester aliphatique peut être choisi parmi les polylactones telles que la polycaprolactone ou la polypivalolactone ou la polyenantholactone ou le polycaprilolactone. Les polyesters aliphatiques greffés sont préparés à partir des mêmes polyesters.

On greffe sur le polyester aliphatique au moins un monomère choisi parmi :
- les acides carboxyliques insaturés, leurs sels, leurs esters, leurs anhydrides ;
- les produits insaturés portant des fonctions époxydées ;
- les esters vinyliques ;
- le styrène et ses dérivés.

A titre d'exemple, on peut citer :
- l'acide (méth)acrylique, l'acide fumarique, l'acide mésaconique ;
- les (méth)acrylates d'alkyles tels que le méthacrylate de méthyle, l'acrylate de butyle, l'acrylate de tertiobutyle ou l'acrylate d'hydroxyéthyle ;
- l'anhydride citraconique, l'anhydride itaconique, l'anhydride tétrahydrophtalique, l'anhydride méthyl-2 maléique, l'anhydride diméthyl-2,3 maléique et l'anhydride maléique ;
- les esters et les éthers de glycidyle aliphatiques tels que, le (méth)acrylate de glycidyle, le maléate de glycidyle, l'itaconate de glycidyle, le vinylglycidyléther, l'alkylglycidyléther.

On peut citer aussi les esters et les éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo (2,2,1)-5-heptène-2,3 diglycidyl dicarboxylate, le vinylcyclohexène monoxyde, le METHB ;
- l'acétate de vinyle.

Le greffage peut s'effectuer en extrudeuse à l'état fondu en présence d'initiateurs radicalaires.

La quantité de monomère greffé est en général inférieure à 15 % en poids du polyester aliphatique.

Il est bien connu que les polyesters aliphatiques et en particulier la polycaprolactone est sensible à l'attaque de radicaux initiés par décomposition thermique d'initiateurs appropriés comme des peroxydes. En l'absence de tout autre réactif, cette attaque radicalaire conduit à la modification de l'architecture moléculaire du produit de départ par branchement les unes avec les autres des chaînes du polymère: cette modification est appelée branchement long et, si la quantité de radicaux produits est suffisante, elle conduit à la réticulation du polymère.

De plus, les polyesters aliphatiques tels que les polylactones, obtenus généralement par des réactions de polycondensation, présentent des chaînes moléculaires linéaires et, de ce fait, au-delà du point de fusion de leurs zones cristallines, une viscosité de fusion très faible, généralement incompatible avec une bonne manipulabilité du produit en sortie, par exemple, d'une extrudeuse. De plus, cette faible viscosité de fusion peut être préjudiciable à une bonne compatibilité ou une bonne miscibilité de ce produit même avec des polymères réputés miscibles ou compatibles et, de ce fait, être préjudiciable à l'action de compatibilisation désirée des mélanges de polymères. Le greffage à l'état fondu, en extrudeuse, par l'intermédiaire d'initiateurs radicalaire, permet, du fait des réactions de branchement parallèles à la réaction de greffage, d'augmenter considérablement la viscosité du polymère et de la rendre plus apte au mélange ultérieur.

Par exemple, le greffage à l'état fondu, en extrudeuse, de l'ε-polycaprolactone, se déroule typiquement dans les conditions suivantes:

L'extrudeuse, de type WERNER® 30 utilisée est une extrudeuse bi-vis corotative présentant un profil de températures comme décrit dans le tableau ci-dessous:

| **Zone d'introduction de la PCL** | **Zone d'injection des réactifs** | **ZONES DE REACTION** | | **Zone de dégazage** | | **Filière de sortie** |
|---|---|---|---|---|---|---|
| 20°C | 120°C | 210°C | 210°C | 220°C | 220°C | 220°C |

La zone d'introduction de la polycaprolactone est maintenue basse ( 20°C ) du fait du bas point de fusion du produit ( 60°C ) afin d'éviter des bouchages à la goulotte d'alimentation et assurer un bon transport du produit.

La vitesse de vis est typiquement de 200 tours/minutes pour un débit d'extrusion d'environ 10 kg/h.

Les produits volatils de la réaction sont éliminés en zone de dégazage sous un vide maximum.

La température des zones de réaction est adaptée à l'initiateur radicalaire utilisé et au temps de séjour des réactifs de telle façon que tout l'initiateur radicalaire se soit décomposé au moins à 99,9%. Elles sont typiquement de 210°C pour des initiateurs comme le DHBP (2,5-diméthyl 2,5(ditertiobutylperoxy)hexane) ou le DICUP (peroxyde de dicumyle), de 190°C pour le TMCH (1,1-di(terbutylperoxy)-3,3,5-triméthylcyclohexane) ou de 175°C pour le peroxyde de benzoyle.

Pour greffer les polyesters aliphatiques, les initiateurs radicalaires utilisables sont nombreux ; on peut citer, par exemple, les peroxydes de diacyles, les peroxydes dérivés de composés cétoniques, les peroxydicarbonates, les peroxyesters, les peroxydes de dialkyles, les peroxydes de dérivés organosulfonyles, les peroxycétales.

L'initiateur radicalaire est usuellement dilué dans un solvant (par exemple le trichlorobenzène) mais il peut être utilisé tel que s'il est liquide (par exemple le DHBP). Il est généralement injecté par l'intermédiaire d'une pompe doseuse dans le polyester aliphatique fondu à une température suffisamment basse pour que l'initiateur puisse se mélanger convenablement dans la masse fondue avant de commencer à se décomposer et à réagir. Il peut également être introduit en mélange avec une poudre d'un polymère approprié au même endroit que les granulés du polyester aliphatique par l'intermédiaire d'un doseur approprié.

Les monomères sont généralement injectés dans la masse fondue par l'intermédiaire d'une pompe doseuse, s'ils sont liquides, dans la même zone d'injection que celle de l'initiateur radicalaire. Pour plus de convenance, parfois, le monomère peut servir de solvant à l'initiateur radicalaire.

On utilise avantageusement parmi les polyesters aliphatiques greffés ceux qui sont greffés par des époxydes insaturés et de préférence la polycaprolatone greffée par du méthacrylate de glycidyle.

Le polyméthacrylate de méthyle imidisé est par exemple celui décrit dans les brevets EP 438 239 et EP 216 505 et dont le contenu est incorporé dans la présente demande.

Les polyoléfines qu'on greffe par du MMA ou du PMMA peuvent être par exemple des homo ou copolymères de l'éthylène, des copolymères de l'éthylène comprenant un ou plusieurs motifs choisis parmi les epoxydes insaturés, les dérivés vinyliques, les acides carboxyliques insaturés, leurs sels, leurs esters ou leurs anhydrides. A titre d'exemple, on peut citer les copolymères éthylène / méthacrylate de glycidyle (GMA) greffé par le PMMA.

Selon une troisième forme, la présente invention concerne des compositions comprenant (i) une matrice de polyfluorure de vinylidène (PVDF) dans laquelle sont dispersés des nodules de caoutchouc vulcanisé et (ii) un agent de compatibilisation.

Le caoutchouc vulcanisable peut être choisi parmi les caoutchoucs cités précédemment et aussi les caoutchoucs fluorés. A titre d'exemple de caoutchoucs fluorés, on peut citer les copolymères du VF₂ et de l'hexafluoropropylène, les copolymères du VF₂ de l'hexafluoropropylène ou du pentafluoropropylène et du tétrafluoroéthylène. Des caoutchoucs fluorés sont décrits aussi dans KIRK-OTHMER Encycopedia of Chemical Technology 3e édition Vol. 8 pages 500 - 504.

Le procédé de préparation est le même que précédemment, on peut ajouter l'agent de compatibilisation dans la formulation de caoutchouc vulcanisable.

La présente invention concerne aussi les objets fabriqués avec ces compositions.

En particulier, l'invention est particulièrement utile pour fabriquer des tubes par extrusion. On utilise de préférence les compositions contenant un agent de compatibilisation, c'est-à-dire les compositions selon les deuxième et troisième formes de l'invention. Les tubes présentent une très bonne résistance au choc.

Les exemples suivants illustrent l'invention :

### Exemple A : préparation de polycaprolactone (PCL) greffée par le méthacrylate de glycidyle.

On utilise la PCL :
- TONE® 767E fournie par UNION CARBIDE COMPANY d'indice de fluidité (melt index) de 30 dg/min mesuré à 190°C sous une charge de 2,6 kg.

Le peroxyde utilisé est le DHBP (LUPEROX 101)

Le méthacrylate de glycidyle greffé est dosé en spectroscopie infrarouge (IRTF) après étalonnage par le monomère sur la bande d'absorption caractéristique à 910 cm⁻ ¹sur un film de 100 µm d'épaisseur obtenu sous presse à 190 °C pendant 1 min 30.

L' indice de fluidité (MI) est mesuré à 120° C sous une charge de 2,16 kg et exprimé en dg/min.

| | | |
|---|---|---|
| Teneur en GMA introduite % | 2,5 | 2,5 |
| Teneur en DHBP introduite % | 0,2 | 0,6 |
| MI | 24,3 | 13,1 |
| GMA greffé% | 0,6 | 1,2 |
| Rendement % | 24 | 48 |

### Exemples 1 à 12

PVDF/XNBR avec, éventuellement, des PCL g GMA (Polycaprolactone greffée méthacrylate de glycidyle à 0,6% ou 1,2%) de l'Exemple A ou le PARALOID® EXL 4151 commercialisé par Rohm & Haas, qui est un PMMA imidisé.

Un élastomère nitrile carboxylé (XNBR) commercialisé par GOODYEAR sous la dénomination CHEMIGUM® a été formulé sur mélangeur interne à des températures n'excédant pas 120°C selon les deux compositions suivantes (parties en poids) :

| | | XNBR6Ma | XNBR4Mb |
|---|---|---|---|
| Butadiène acrylonitrile carboxylé : | | | |
| XNBR RCG 7343 | | 110 | 110 |
| Charges | Silice VN3 | 15 | 15 |
| | TiO₂ | 5 | 5 |
| Phtalate de Diundecyle | DIUP | 10 | 10 |
| Polyéthylène glycol | PEG 4000 | 2 | 2 |
| Vinyl silane (triméthoxy) | SI69 | | 1 |
| Antioxydant | WINGSTAY® 29 | 1 | 1 |
| Activateur | Polyvest C70 | | 4 |
| Auxiliaire de vulcanisation | Vulcacit J | | 2 |
| N-morpholinothiobenzothiazole | MBS | | 2 |
| Retardateur | Vulcalent E | | 1 |
| | Silanogran P | 2 | |
| Di.tert.butyl peroxyde | TRIGONOX® B | 2 | |
| Retardateur | SARET® 517 | 2 | |
| | soufre | | 1 |
| Oxyde de zinc | ZnO | 5 | 5 |
| | Acide stéarique | 1 | 1 |
| ts2(temps de grillage) à 160°C | (min) | 4,2 | 8 |

Ces deux formulations ont ensuite été mélangées soit avec du PVDF 1000 soit du PVDF 9000 en présence ou non d'un agent compatibilisant (PCL g GMA ou EXL 4151) à l'aide d'un mélangeur interne (G) ou d'un co-malaxeur (B). Les différentes compositions retenues sont les suivantes :

| **Exemples** | **1** | **2** | **3** | **4** | **5** | **6** | **7** | **8** | **9** | **10** | **11** | **12** |
|---|---|---|---|---|---|---|---|---|---|---|---|---|
| appareil | G | G | G | B | B | B | B | B | B | B | B | B |
| PVDF 9000 | 50 | 50 | 50 | 50 | 60 | | 75 | 80 | 60 | 50 | | 75 |
| PVDF 1000 | | | | | | 75 | | | | | 60 | |
| PCLgGMA (0,6%) | 10 | | | 10 | | 5 | 5 | | | | | |
| PCLgGMA (1,2%) | | 10 | 10 | | | | | | | | | |
| EXL 4151 | | | | | | | | | 10 | 10 | 10 | 5 |
| XNBR 6Ma | 40 | 40 | | 40 | 40 | 20 | 20 | 20 | 30 | 40 | 30 | 20 |
| XNBR 4Mb | | | 40 | | | | | | | | | |

Le PVDF 9000 est un polyfluorure de vinylidène de MI compris entre 17 et 23 g/10 min. à 230° C sous 5 kg.

Le PVDF 1000 est un polyfluorure de vinylidène de MI compris entre 1,7 et 2,3 g/10 min. mesuré dans les mêmes conditions.

L'analyse morphologique de ces compositions montre que la phase élastomérique est finement dispersée dans le PVDF. La taille des nodules est de 1 à 3 µm. L'adhésion entre les deux phases est de 3 (note maximale) à l'exception des compositions 5 et 8 pour lesquels l'adhésion est de 1 (note minimale).

Pour les essais 1 à 12, la température en fin de vulcanisation dynamique est de 215-220°C. Les alliages sont granulés puis injectés sous forme de plaques (100X100X2mm) à l'aide d'une presse thermoplastique :
* pour effectuer des tests de traction à partir d'haltères découpées à l'emporte-pièce à partir des plaques injectées. Ces haltères sont découpées dans le sens parallèle et perpendiculaire à l'injection des plaques,
* pour effectuer des tests de choc multiaxial.

Les exemples 5 et 8 sont les exemples sans tiers corps respectivement à comparer aux essais 1, 2, 4, 10 et 6, 7, 12. Les propriétés des compositions à matrice PVDF 9000 peuvent également être comparées au PVDF 9000 seul.

Les résultats sont réunis dans les tableaux suivants :

| *Tests de traction (valeurs indiquées à la rupture, ISO R 527 type H2):* | | | | |
|---|---|---|---|---|
| **Echantillons** | Traction parallèle à l'injection | | Traction perpend. à l'injection | |
| | Force (MPa) | Allong. (%) | Forces (MPa) | Allong. (%) |
| **PVDF 9000** | 40 | 248 | 57 | 6 |
| **1** | 19,3 | 135 | 15,5 | 129 |
| **2** | 18,3 | 112 | 14,3 | 92 |
| **3** | 16,5 | 129 | 13,6 | 135 |
| **4** | 18,6 | 144 | 13,9 | 143 |
| **5** | 21,9 | 139 | 19,7 | 241 |
| **6** | 30,7 | 94 | 22,5 | 103 |
| **7** | 27,2 | 145 | 22,3 | 59 |
| **8** | 30,5 | 127 | 23,9 | 123 |
| **9** | 25,7 | 118 | 28 | 311 |
| **10** | 21,6 | 92 | 26,3 | 283 |
| **11** | 26,2 | 72 | 26,5 | 268 |
| **12** | 30,7 | 150 | 25,4 | 275 |

| *Tests de choc multiaxial (DART TEST ISO 6603-2) :* | | | | |
|---|---|---|---|---|
| **Echantillons** | Essais chocs | | | |
| | Force max. (N) | Déplacement à force max (mm) | Energie à force max. (N.m) | Energie totale (N.m) |
| **PVDF 9000** | 1178 | 6,9 | 4,1 | 7,3 |
| **1** | 2696 | 15,9 | 20,8 | 22,5 |
| **2** | 2396 | 14,3 | 15,4 | 16,8 |
| **3** | 2448 | 15,6 | 18,3 | 19,8 |
| **4** | 2685 | 17,1 | 22,3 | 25 |
| **5** | 2239 | 11,7 | 11,4 | 12,3 |
| **6** | 3980 | 15,3 | 32,5 | 42,3 |
| **7** | 3932 | 14,3 | 29,3 | 31,5 |
| **8** | 3620 | 11,7 | 20,9 | 22,4 |
| **9** | 3694 | 15,6 | 30,3 | 44,9 |
| **10** | 3449 | 17,1 | 30,9 | 39,3 |
| **11** | 3618 | 15,4 | 29,0 | 45,0 |
| **12** | 4272 | 15,1 | 36 | 57,6 |

Extrusion des compositions : Les produits cités précédemment ont été transformés sous forme de tubes 6X8 mm (diamètre interne X diamètre externe) sur extrudeuse FAIREX de 30 (vitesse des vis : 20 tr/min; calibrage : 1,2 m/min). Tous les produits ont pu être transformés pour conduire à des tubes plus ou moins souples selon la composition à l'exception des exemples 5 et 8 qui donnent des tubes cassants et hétérogènes. Le PVDF 9000 seul conduit à un tube très rigide.

### Exemples 13 et 14

PVDF/ECO caoutchouc épichlorhydrine avec le MODIPER 4200 comme agent de couplage qui est un copolymère éthylène-GMA greffé PMMA.

Un élastomère Epichlorhydrine terpolymère commercialisé par ZEON sous la dénomination Hydrin® a été formulé sur cylindre à une température n'excédant pas 120° C selon la composition suivante (parties en poids) :

| | ECOT M2d |
|---|---|
| HYDRIN® T70X1 | 100 |
| Acide stéarique | 1 |
| Extrusil® (silice de DEGUSSA FRANCE) | 20 |
| Noir de carbone FEF N550 | 30 |
| Maglite® D | 3 |
| CaCO₃ | 5 |
| Silane A1100 (agent de couplage) | 1 |
| Zisnet F (Triazine de ZEON CHEMICAL) | 1 |
| PVI 50 (N(cyclohexylthio)phtalimide de MONSANTO) | 2 |
| ts2 (temps de grillage) à 160°C | 2 min 30s |

Cette formulation élastomérique a ensuite été mélangée avec du PVDF 9000 en présence de MODIPER 4200 en mélangeur interne GUMIX selon les deux compositions précisées dans le tableau ci-dessous. La température en fin de vulcanisation dynamique atteint 200°C pour l'exemple 14 et 215°C pour l'exemple 13.

| **Exemples** | **13** | **14** |
|---|---|---|
| PVDF 9000 | 70 | 55 |
| MODIPER 4200 | 5 | 5 |
| ECOT M2d | 25 | 40 |

L'analyse morphologique des compositions 13 et 14 montre que la phase élastomérique est finement dispersée dans le PVDF et que la taille des nodules est de 1 à 2 µm. L'adhésion entre les deux phases est de 3 (note maximale).

Les produits 13 et 14 ont été moulés par injection sous forme de plaques (100X100X2mm) à l'aide d'une presse thermoplastique :
* pour effectuer des tests de traction à partir d'haltères découpées à l'emporte pièce dans les plaques injectées. Ces haltères ont été découpées dans le sens parallèle et perpendiculaire à l'injection des plaques,
* pour effectuer des tests de choc multiaxial.

Les résultats sont réunis dans les tableaux ci-dessous.

| *Tests de traction (valeurs indiquées à la rupture, ISO R 527 type H2) :* | | | | |
|---|---|---|---|---|
| **Echantillons** | Traction parallèle à l'injection | | Traction perpend. à l'injection | |
| | Force (MPa) | Allong. (%) | Forces (MPa) | Allong. (%) |
| **PVDF 9000** | 40 | 248 | 57 | 6 |
| **13** | 29,5 | 89 | 23,8 | 112 |
| **14** | 26 | 47 | 19 | 96 |

| *Tests de choc multiaxial (DART TEST ISO 6603-2) :* | | | | |
|---|---|---|---|---|
| **Echantillons** | Essais chocs | | | |
| | Force max. (N) | Déplacement à force max (mm) | Energie à force max. (N.m) | Energie totale (N.m) |
| **PVDF 9000** | 1178 | 6,9 | 4,1 | 7,3 |
| **13** | 3903 | 15,3 | 33,2 | 35,6 |
| **14** | 3305 | 14,5 | 23,3 | 24,9 |

Extrusion : Les produits cités précédemment (exemples 13 et 14) ont été transformés sous forme de tubes 6X8 mm (diamètre interne X diamètre externe) sur extrudeuse FAIREX de 30 (vitesse des vis : 20 tr/min; calibrage : 1,2 m/min). Les tubes obtenus sont lisses et ne présentent aucun défaut.

## Revendications

1. Composition thermoplastique ayant une morphologie de type "nodulaire", caractérisée en ce qu'elle comprend une matrice PVDF dans laquelle sont dispersés des nodules au plus de 3 µm de caoutchouc vulcanisé essentiellement non fluoré et obtenue par vulcanisation dynamique, à l'aide d'un système de vulcanisation, du PVDF et du caoutchouc vulcanisable thermoplastiques.

2. Composition selon la revendication 1, caractérisée en ce que le PVDF est un homopolymère de fluorure de vinylidène ou un copolymère possédant au moins 50 % en moles de restes de fluorure de vinylidène (VF₂).

3. Composition selon la revendication 1 ou 2, caractérisée en ce que le système de vulcanisation est sélectionné parmi les peroxydes, le soufre et ses accélérateurs, les molécules donneurs de soufre.

4. Composition selon l'une des revendications 1 à 3, caractérisée en ce que la quantité de PVDF est de 20 à 95 parties en poids, de préférence 40 à 90 parties en poids pour 5 à 80 parties de caoutchouc vulcanisé et ses charges éventuelles et de préférence 10 à 60 parties en poids.

5. Composition selon l'une des revendications 1 à 4, caractérisée en ce qu'elle comprend un agent de compatibilisation.

6. Composition selon la revendication 5, caractérisée en ce que l'agent de compatibilisation est choisi parmi (i) les polyesters aliphatiques, (ii) les polyesters aliphatiques greffés, (iii) le polyméthacrylate de méthyle imidisé ou (iv) les polyoléfines greffées par du méthacrylate de méthyle (MMA) ou du polyméthacrylate de méthyle (PMMA).

## Claims

1. Thermoplastic composition with "nodular"-type morphology, characterized in that it comprises a PVDF matrix in which are dispersed nodules of not more than 3 µm of essentially unfluorinated vulcanized rubber obtained by dynamic vulcanization, using a vulcanizing system, of thermoplastic PVDF and of thermoplastic vulcanizable rubber.

2. Composition according to Claim 1, characterized in that the PVDF is a vinylidene fluoride homopolymer or a copolymer containing at least 50 mol% of vinylidene fluoride (VF₂) residues.

3. Composition according to Claim 1 or 2, characterized in that the vulcanizing system is selected from peroxides, sulphur and its accelerators, and sulphur-donating molecules.

4. Composition according to one of Claims 1 to 3, characterized in that the amount of PVDF is from 20 to 95 parts by weight, preferably 40 to 90 parts by weight, per 5 to 80 parts of vulcanized rubber and its optional fillers, and preferably 10 to 60 parts by weight.

5. Composition according to one of Claims 1 to 4, characterized in that it comprises a compatibilizing agent.

6. Composition according to Claim 5, characterized in that the compatibilizing agent is chosen from (i) aliphatic polyesters, (ii) grafted aliphatic polyesters, (iii) imidized polymethyl methacrylate or (iv) polyolefins grafters with methyl methacrylate (MMA) or with polymethyl methacrylate (PMMA).

## Patentansprüche

1. Thermoplastische Zusammensetzung mit einer Morphologie vom "knollenförmigen" Typ, dadurch gekennzeichnet, daß die eine PVDF-Matrix, in der Knollen von höchstens 3 µm aus vulkanisiertem Kautschuk dispergiert sind, der im wesentlichen nicht fluoriert ist und durch dynamische Vulkanisation von PVDF und thermoplastischem vulkanisierbarem Kautschuk mit Hilfe eines Vulkanisationssystems erhalten worden ist.

2. Zusammensetzung nach Anspruch 1, dadurch gekennzeichnet, daß das PVDF ein Homopolymeres aus Vinylidenfluorid oder ein Copolymeres ist, das mindestens 50 Mol.-% an Vinylidenfluoridresten (VF₂) aufweist.

3. Zusammensetzung nach Anspruch 1 oder 2, dadurch gekennzeichnet, daß das Vulkanisationssystem aus den Peroxiden, Schwefel und seinen Beschleunigern mit Schwefel abgebenden Molekülen ausgewählt ist.

4. Zusammensetzung nach einem der Ansprüche 1 bis 3, dadurch gekennzeichnet, daß die Menge an PVDF 20 bis 95 Gewichtsteile, vorzugsweise 40 bis 90 Gewichtsteile, auf 5 bis 80, vorzugsweise 10 bis 60 Gewichtsteile, vulkanisiertem Kautschuk und die gegebenenfalls vorhandenen Füllstoffe beträgt.

5. Zusammensetzung nach einem der Ansprüche 1 bis 4, dadurch gekennzeichnet, daß sie ein Verträglichkeitsmittel enthält.

6. Zusammensetzung nach Anspruch 5, dadurch gekennzeichnet, daß das Verträglichkeitsmittel ausgewählt ist unter (i) aliphatischen Polyestern, (ii) gepfropften aliphatischen Polyestern, (iii) imidisierten Polymethylmethacrylat oder (iv) mit Methylmethacrylat (MMA) oder Polymethylmethacrylat (PMMA) gepfropftem Polyolefin.
